# EUROPEAN PATENT SPECIFICATION

(11) **EP 3 792 589 B1**
(45) Date of publication and mention of the grant of the patent: **13.03.2024**
(21) Application number: 19800023.4
(22) Date of filing: 22.04.2019
(51) Int. Cl.: G01B 11/30, G01C 15/00, H02S 20/00, G01C 5/00, F24S 25/00, H02S 20/10, H02S 20/30

(54) **EVALUATION METHOD**
BEURTEILUNGSVERFAHREN
PROCÉDÉ D'ÉVALUATION

(30) Priority: 08.05.2018 JP 2018090088
(43) Date of publication of application: 17.03.2021
(73) Proprietor: SUMITOMO ELECTRIC INDUSTRIES, LTD., Osaka-shi, Osaka 541-0041 (JP)
(72) Inventor: KONAKA, Hiroyuki, Osaka-shi, Osaka 541-0041 (JP); MORI, Koji, Osaka-shi, Osaka 541-0041 (JP); KOBAYASHI, Masataka, Osaka-shi, Osaka 541-0041 (JP); YAMAMOTO, Seiji, Osaka-shi, Osaka 541-0041 (JP); UMEHARA, Takeshi, Osaka-shi, Osaka 541-0041 (JP)
(74) Representative: Boult Wade Tennant LLP
(86) International application number: PCT/JP2019/016935
(87) International publication number: WO 2019/216167

(56) References cited:
- WO-A1-2014/168328
- JP-A- H11 166 831
- JP-A- 2001 151 500
- JP-A- 2009 204 349
- JP-A- 2010 242 367
- JP-A- 2013 170 353
- JP-A- 2014 070 468
- JP-B2- 4 794 023
- US-A- 4 907 915
- US-A1- 2014 219 727
- US-A1- 2017 302 221

## Description

### TECHNICAL FIELD

The present invention relates to an evaluation system and an evaluation method. This application claims priority on Japanese Patent Application No. 2018-090088 filed on May 8, 2018.

A photovoltaic apparatus includes a plurality of solar cell modules (hereinafter, may be referred to as "modules") that have flat box shapes and are arranged. In manufacturing of the photovoltaic apparatus, the modules are arranged on a framework-like mounting base, and the modules and the mounting base are fixed by bolts (see, for example, Patent Literature 1).

### CITATION LIST

### [PATENT LITERATURE]

PATENT LITERATURE 1: Japanese Laid-Open Patent Publication No. 2017-22838

US 4,907,915 provides a method and apparatus for installing in the ground an array of posts of a photovoltaic panel support assembly. According to this document, there is provided an adjustable template which comprises a rigid frame having a plurality of adjustable post guides and a plurality of guide rails, which are used in cooperation with an impact driver to install a plurality of support posts quickly and easily. The template is portable and provided with clamping means and a plurality of laser targets for use in cooperation with an alignment laser and an elevation laser to secure and align the template to previously installed posts.

JP 4,794,023 describes that four corners of a frame 3 are supported by a power driving jack device 13. On upper sides of the four corners, irradiating height detecting parts 12 are arranged. An irradiating height of a common laser light irradiating device 11 becomes a height reference to be adjusted by the frame 3. The reference is detected by each irradiating height detecting part 12. A control part 14 drives and controls the power driving jack device 13 so that the detected value may be made to coincide with a preliminarily set value.

WO 2014/168328 A1 describes an apparatus for measuring sag of a solar cell module.

### SUMMARY OF INVENTION

An evaluation system according to an aspect of the present disclosure is an evaluation system for evaluating a vertical-direction height of each of a plurality of module mounting surfaces of a mounting base, the plurality of module mounting surfaces allowing a plurality of solar cell modules to be attached thereto, the evaluation system including: a height measurement device including a laser radiation unit configured to be mounted on a reference surface of the mounting base and radiate a laser beam, and a measurement unit configured to be mounted on the module mounting surface; and a data processing device configured to process a result of measurement by the height measurement device. The measurement unit includes a light receiving unit configured to receive a laser beam radiated by the laser radiation unit, and a calculation unit configured to detect the vertical-direction height of the module mounting surface on the basis of a reception position of the laser beam in the light receiving unit. The data processing device outputs, for each of the plurality of module mounting surfaces, a height adjustment value so as to allow light receiving surfaces of the plurality of solar cell modules to form one flat surface, on the basis of respective differences between the vertical-direction heights of the plurality of module mounting surfaces detected by the calculation unit and a predetermined reference height in a vertical direction.

An evaluation method according to an aspect of the present disclosure is an evaluation method for evaluating a vertical-direction height of each of a plurality of module mounting surfaces of a mounting base, the plurality of module mounting surfaces allowing a plurality of solar cell modules to be attached thereto, the evaluation method including the steps of: radiating a laser beam from a laser radiation unit mounted on a reference surface of the mounting base; sequentially mounting a measurement unit on each of the plurality of module mounting surfaces, and by the measurement unit, receiving the laser beam radiated by the laser radiation unit, on each of the plurality of module mounting surfaces; by the measurement unit, detecting a vertical-direction height of each of the plurality of module mounting surfaces on the basis of a reception position of the laser beam in the measurement unit; and by a data processing device, outputting, for each of the plurality of module mounting surfaces, a height adjustment value so as to allow light receiving surfaces of the plurality of solar cell modules to form one flat surface, on the basis of respective differences between the vertical-direction heights of the plurality of module mounting surfaces detected by the measurement unit and a predetermined reference height in a vertical direction.

### BRIEF DESCRIPTION OF DRAWINGS

FIG. 1 is a perspective view showing the structure of a photovoltaic apparatus according to an embodiment.
FIG. 2 is a perspective view showing the structure of a support device of the photovoltaic apparatus according to the embodiment.
FIG. 3 is a block diagram showing the configuration of a module mounting surface height evaluation system according to the embodiment.
FIG. 4 illustrates work for module mounting surface height evaluation according to the embodiment.
FIG. 5 is a flowchart showing an example of a module mounting surface height evaluation method for the photovoltaic apparatus according to the embodiment.
FIG. 6 illustrates module mounting surfaces on which adjacent units are to be mounted.
FIG. 7 is a block diagram showing an example of the configuration of a height measurement device according to a second modification.
FIG. 8 is a block diagram showing an example of the configuration of a height measurement device according to a third modification.

### DESCRIPTION OF EMBODIMENTS

### <Problems to be solved by the present disclosure>

In the photovoltaic apparatus, it is required that light receiving surfaces of modules form one flat surface with no steps and no slopes. Therefore, at the time of attaching the modules to a mounting base, a worker measures the heights of module mounting surfaces on the mounting base, and attaches a shim at a part where the mounting surface height is small, thereby equalizing the mounting heights of the modules. The measurement for the module mounting surface height is performed by the worker using a transit through visual observation, and thus is a complicated work.

### <Effects of the present disclosure>

According to the present disclosure, workability for module mounting surface height measurement is improved.

### <Outlines of embodiments of the present disclosure>

Hereinafter, the outlines of embodiments of the present disclosure are listed and described. In accordance with an aspect of the invention, there is an evaluation method as described in claim 1.

(1) An evaluation system according to an example is an evaluation system for evaluating a vertical-direction height of each of a plurality of module mounting surfaces of a mounting base, the plurality of module mounting surfaces allowing a plurality of solar cell modules to be attached thereto, the evaluation system including: a height measurement device including a laser radiation unit configured to be mounted on a reference surface of the mounting base and radiate a laser beam, and a measurement unit configured to be mounted on the module mounting surface; and a data processing device configured to process a result of measurement by the height measurement device. The measurement unit includes a light receiving unit configured to receive a laser beam radiated by the laser radiation unit, and a calculation unit configured to detect the vertical-direction height of the module mounting surface on the basis of a reception position of the laser beam in the light receiving unit. The data processing device outputs, for each of the plurality of module mounting surfaces, a height adjustment value so as to allow light receiving surfaces of the plurality of solar cell modules to form one flat surface, on the basis of respective differences between the vertical-direction heights of the plurality of module mounting surfaces detected by the calculation unit and a predetermined reference height in a vertical direction. Thus, the heights of the module mounting surfaces can be measured by the height measurement device, whereby workability is improved.
(2) In the evaluation system according to the example, the reference height may be one vertical-direction height of the module mounting surface selected from the vertical-direction heights of the plurality of module mounting surfaces detected by the calculation unit. Thus, it is possible to make evaluation about the degree in which the height of each module mounting surface should be adjusted relative to the module mounting surface serving as the reference surface.
(3) In the evaluation system according to the example, the light receiving unit may receive the laser beam radiated by the laser radiation unit every time the measurement unit is sequentially mounted on each of the plurality of module mounting surfaces, the calculation unit may detect the vertical-direction height of the module mounting surface every time the measurement unit is sequentially mounted on each of the plurality of module mounting surfaces, the measurement unit may further include a storage unit configured to store the vertical-direction height of each of the plurality of module mounting surfaces detected by the calculation unit, and the data processing device may output the height adjustment value for each of the plurality of module mounting surfaces on the basis of the respective vertical-direction heights of the plurality of module mounting surfaces stored in the storage unit. Thus, the height of each module mounting surface stored in the storage unit can be easily inputted to the data processing device, whereby workability is further improved.
(4) In the evaluation system according to the example, the storage unit may store the vertical-direction heights of the plurality of module mounting surfaces respectively in association with a plurality of pieces of identification information for identifying the plurality of module mounting surfaces, and the data processing device may output the height adjustment value for each piece of the identification information. Thus, it is possible to easily specify the module mounting surface to which each height adjustment value corresponds.
(5) In the evaluation system according to the example, the light receiving unit may receive the laser beam radiated by the laser radiation unit every time the measurement unit is sequentially mounted on each of the plurality of module mounting surfaces, the calculation unit may detect the vertical-direction height of the module mounting surface every time the measurement unit is sequentially mounted on each of the plurality of module mounting surfaces, the measurement unit may further include a first wireless communication unit configured to wirelessly transmit vertical-direction height information of each of the plurality of module mounting surfaces detected by the calculation unit, the data processing device may include a second wireless communication unit capable of wireless communication with the first wireless communication unit, and the data processing device may output the height adjustment value for each of the plurality of module mounting surfaces on the basis of the vertical-direction height information of each of the plurality of module mounting surfaces received by the second wireless communication unit. Thus, the height of each module mounting surface can be transmitted to the data processing device via wireless communication, whereby workability is further improved.
(6) In the evaluation system according to the example, the first wireless communication unit may wirelessly transmit the vertical-direction height information of each of the plurality of module mounting surfaces respectively in association with a plurality of pieces of identification information for identifying the plurality of module mounting surfaces, and the data processing device may output the height adjustment value for each piece of the identification information. Thus, it is possible to easily specify the module mounting surface to which each height adjustment value corresponds.
(7) In the evaluation system according to the example, the measurement unit may further include a command transmission unit configured to transmit a laser radiation command, the laser radiation unit may further include a command reception unit configured to receive the laser radiation command transmitted by the command transmission unit, and the laser radiation unit may radiate the laser beam in accordance with the laser radiation command received by the command reception unit. Thus, the laser beam is radiated in accordance with the laser radiation command from the measurement unit mounted on the module mounting surface, whereby workability is even more improved.
(8) In the evaluation system according to the example, a plurality of the measurement units may be respectively mounted on the plurality of module mounting surfaces, and a plurality of the light receiving units respectively provided to the plurality of measurement units may receive the laser beam radiated from the laser radiation unit. Thus, the heights of a plurality of module mounting surfaces can be measured by one laser radiation, whereby workability is even more improved.
(9) In the evaluation system according to the example, the height measurement device may further include a remote controller including a command transmission unit configured to transmit a laser radiation command, the laser radiation unit may include a command reception unit configured to receive the laser radiation command transmitted from the remote controller, and the laser radiation unit may radiate the laser beam in accordance with the laser radiation command received by the command reception unit. Thus, the laser beam is radiated in accordance with the laser radiation command from the remote controller, whereby workability is even more improved.
(10) A height evaluation method according to the example is an evaluation method for evaluating a vertical-direction height of each of a plurality of module mounting surfaces of a mounting base, the plurality of module mounting surfaces allowing a plurality of solar cell modules to be attached thereto, the evaluation method including the steps of: radiating a laser beam from a laser radiation unit mounted on a reference surface of the mounting base; sequentially mounting a measurement unit on each of the plurality of module mounting surfaces, and by the measurement unit, receiving the laser beam radiated by the laser radiation unit, on each of the plurality of module mounting surfaces; by the measurement unit, detecting a vertical-direction height of each of the plurality of module mounting surfaces on the basis of a reception position of the laser beam in the measurement unit; and by a data processing device, outputting, for each of the plurality of module mounting surfaces, a height adjustment value so as to allow light receiving surfaces of the plurality of solar cell modules to form one flat surface, on the basis of respective differences between the vertical-direction heights of the plurality of module mounting surfaces detected by the measurement unit and a predetermined reference height in a vertical direction. Thus, the height of each module mounting surface can be measured by the measurement unit receiving the laser beam radiated from the laser radiation unit, whereby workability is improved.

### <Details of embodiments of the present disclosure>

Hereinafter, the details of embodiments of the present disclosure will be described with reference to the drawings.

### [1. Structure of photovoltaic apparatus]

Hereinafter, the structure of a photovoltaic apparatus according to the present embodiment will be described.

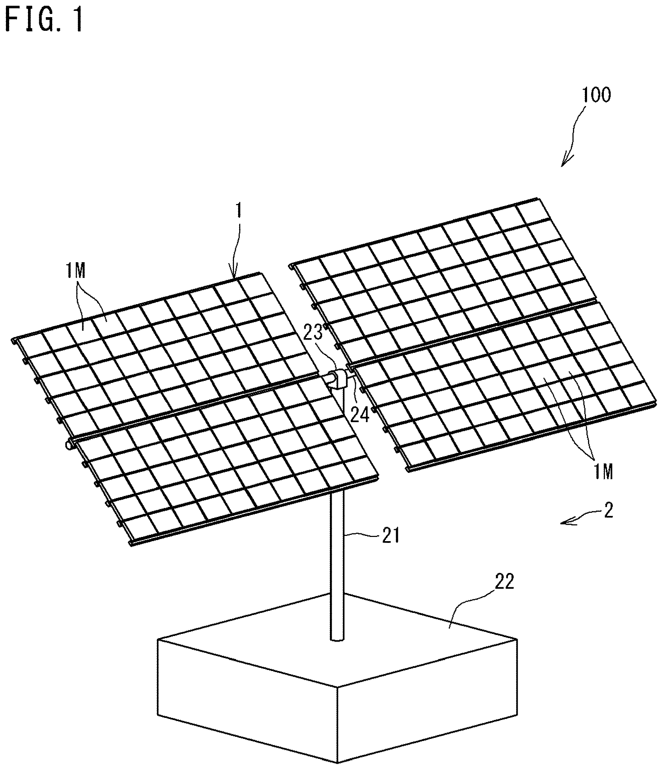

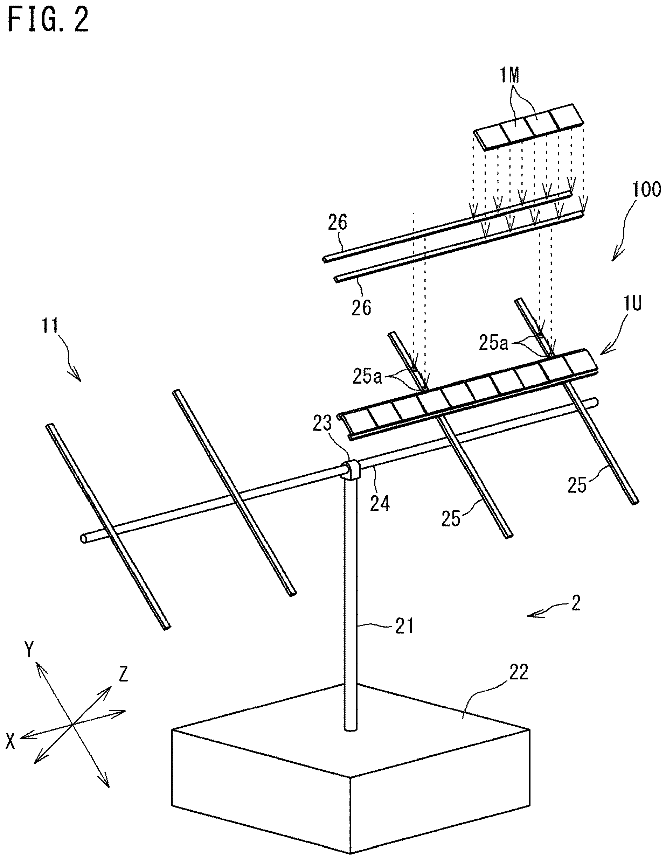

FIG. 1 is a perspective view showing the structure of the photovoltaic apparatus according to the present embodiment. A photovoltaic apparatus 100 includes an array 1 having a shape split between left and right, and a support device 2 therefor. The array 1 is formed by arraying concentrator solar cell modules (concentrator photovoltaic modules) 1M on a mounting base 11 (FIG. 2) at the rear face side. In the example in FIG. 1, the array 1 is configured as an assembly composed of 200 (100 (= 10×10)×2) modules 1M forming the left and right wings.

FIG. 2 is a perspective view showing the structure of the support device of the photovoltaic apparatus according to the present embodiment. The support device 2 includes a post 21, a base 22, a biaxial drive part 23, and a horizontal shaft 24 serving as a drive shaft. The lower end of the post 21 is fixed to the base 22, and the upper end of the post 21 is provided with the biaxial drive part 23. A box (not shown) for electric connection and for accommodating electric circuits is provided in the vicinity of the lower end of the post 21.

In FIG. 2, the base 22 is firmly embedded in the ground to an extent that only the upper face thereof is shown. In the state where the base 22 is embedded in the ground, the post 21 extends vertically and the horizontal shaft 24 extends horizontally. The biaxial drive part 23 can rotate the horizontal shaft 24 in two directions of azimuth (angle around the post 21 as the center axis) and elevation (angle around the horizontal shaft 24 as the center axis).

At a plurality of locations in the longitudinal direction of the horizontal shaft 24, bar-shaped support arms 25 are provided perpendicularly to the horizontal shaft 24. The modules 1M are attached to the support arms 25. Hereinafter, the longitudinal direction of the horizontal shaft 24 is referred to as "X direction", the longitudinal direction of the support arm 25 is referred to as "Y direction", and the direction perpendicular to both of the X direction and the Y direction (i.e., normal direction to the light receiving surface of the array 1) is referred to as "Z direction". A unit 1U including the modules 1M arranged in one line in the X direction is attached to the support arms 25.

The unit 1U includes a plurality of (in the example in FIG. 2, ten) modules 1M, and two rails 26 for fixing the modules 1M. The rails 26 extend in the X direction, i.e., a direction perpendicular to the support arms 25. The two rails 26 extend in parallel to each other with a predetermined distance therebetween in the Y direction, and the modules 1M are fixed to one surface of each rail 26. In the example in FIG. 2, each rail 26 is fixed to the support arms 25 at two locations. That is, in the example in FIG. 2, the unit 1U is fixed to the support arms 25 at four locations by bolts and nuts. A plurality of such units 1U are arranged in the Y direction and each unit 1U is fixed to the support arms 25. Thus, the array 1 in which the modules 1M are arranged in a matrix form in the X direction and the Y direction, is formed (see FIG. 1).

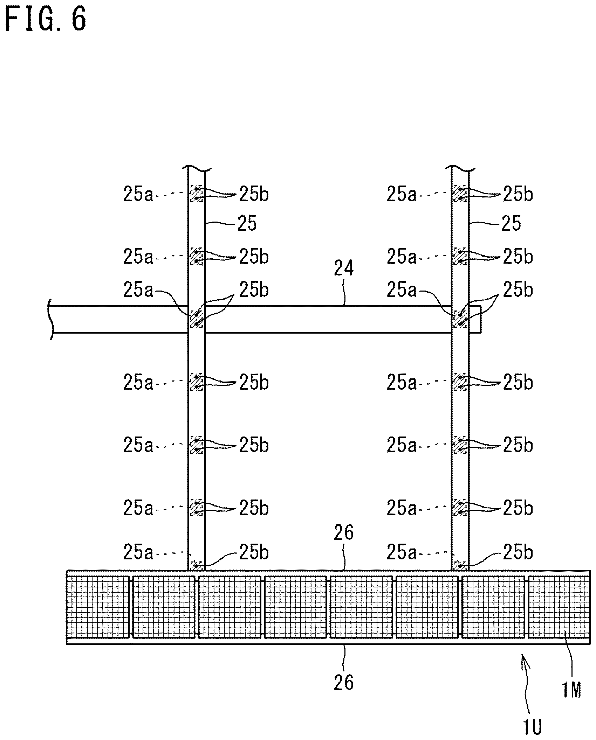

The attachment surface for the unit 1U on the support arm 25 described above is a module mounting surface 25a according to the present embodiment. That is, the module mounting surface 25a corresponds to the intersection of the support arm 25 and the rail 26. The module mounting surface 25a is provided at intervals of about 1 m, for example. On the mounting base 11, a plurality of module mounting surfaces 25a are provided in a planar shape. When the modules 1M, i.e., the units 1U are properly attached to the module mounting surfaces 25a, the modules 1M are arranged with their light receiving surfaces forming one flat surface (see FIG. 1). The module mounting surface 25a is provided with attachment holes 25b which are drilled holes through which bolts penetrate (see FIG. 6). On the other hand, attachment holes through which bolts penetrate are provided also at the attachment parts of the rail 26 to the support arms 25. With the positions of these attachment holes aligned, the shaft of each bolt penetrates through the two attachment holes, and the bolt and a nut are screwed, whereby the unit 1U is fixed to the support arms 25.

As described above, the mounting base 11 is fixed to the horizontal shaft 24. Therefore, when the horizontal shaft 24 rotates in the direction of azimuth or elevation, the array 1 fixed to the mounting base 11 also rotates in that direction.

In FIG. 1 and FIG. 2, the support device 2 supporting the array 1 by one post 21 is shown. However, the structure of the support device 2 is not limited thereto. That is, any support device that can support the array 1 so as to be movable in two axes (azimuth, elevation) can be employed. In addition, the structure in which the unit 1U with a plurality of modules 1M fixed mutually is attached to the mounting base 11, is described, but the structure is not limited thereto. The modules may be directly mounted to a plurality of module mounting surfaces of the mounting base 11.

The module 1M is a concentrator solar cell module, and is configured such that, for example, a plurality of cells which are photoelectric conversion elements are arranged inside a housing made of metal and having a rectangular flat-bottomed container shape, and a condenser lens is provided at a concentrating portion attached as a cover on the housing. In the module 1M as described above, the condenser lens converges sunlight and each cell receives the converged light, to generate electricity.

The photovoltaic apparatus 100 configured as described above can execute sun tracking. In the sun tracking, the attitude of the array 1 is controlled to rotate the array 1 in the azimuth direction and the elevation direction so that the light receiving surface of the array 1 faces the sun directly from the front, i.e., so that the incident angle of the sunlight to the light receiving surface of the array 1 is perpendicular.

The module 1M is not limited to a concentrator solar cell module, but may be a crystalline silicon solar cell module (crystalline silicon photovoltaic module).

### [2. Configuration of module mounting surface height evaluation system]

The module mounting surfaces 25a of the mounting base 11 can vary in the heights (positions in Z direction). To such a mounting base 11, it is required to attach the modules 1M such that the light receiving surfaces of the modules 1M form one flat surface with no steps and no slopes. Therefore, in attachment work for the modules 1M, the heights of the module mounting surfaces 25a are measured, and a shim which is a flat plate having a predetermined thickness is attached to the module mounting surface 25a having a small height, whereby the mounting height of the module 1M is adjusted. In the present embodiment, a module mounting surface height evaluation system for evaluating the height of the module mounting surface 25a is used for determining whether or not the shim is needed, and if the shim is needed, the type and the number thereof.

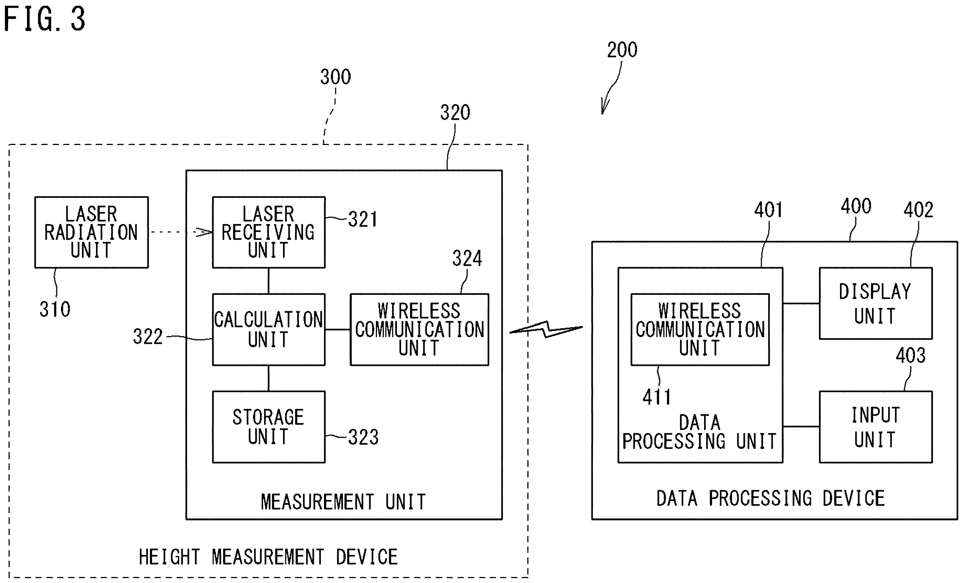

FIG. 3 is a block diagram showing the configuration of the module mounting surface height evaluation system according to the present embodiment. A module mounting surface height evaluation system 200 includes a height measurement device 300 and a data processing device 400.

The height measurement device 300 is a laser-type height measurement device and includes a laser radiation unit 310 and a measurement unit 320. The laser radiation unit 310 automatically corrects the laser radiation direction even in a state of not being mounted horizontally, and radiates a laser beam over a 360° range in the horizontal direction. The measurement unit 320 includes a laser receiving unit 321, a calculation unit 322, a storage unit 323, and a wireless communication unit (first wireless communication unit) 324.

The laser receiving unit 321 receives a laser beam radiated by the laser radiation unit 310, and outputs a signal corresponding to the reception height of the laser beam. The calculation unit 322 is connected to the laser receiving unit 321 and receives the signal outputted from the laser receiving unit 321. The calculation unit 322 calculates the reception height of the laser beam on the basis of the signal received from the laser receiving unit 321. The storage unit 323 is connected to the calculation unit 322 and stores the reception height of the laser beam outputted from the calculation unit 322. The wireless communication unit 324 wirelessly transmits height data stored in the storage unit 323.

The data processing device 400 is formed from a computer, and includes a data processing unit 401, a display unit 402, and an input unit 403. The data processing unit 401 includes a CPU, a memory, and a hard disk. The data processing unit 401 is connected to the display unit 402 and the input unit 403. The display unit 402 is formed from a liquid crystal panel, an organic electro luminescence (EL) display, or the like, and displays a video in accordance with a video signal sent from the data processing unit 401. The input unit 403 is formed from a keyboard and a pointing device (such as a mouse), and receives an input from a user and transmits an input signal to the data processing unit 401.

The data processing unit 401 further includes a wireless communication unit (second wireless communication unit) 411. The wireless communication unit 411 receives a radio signal transmitted from the measurement unit 320. The wireless communication unit 411 decodes the received radio signal to extract data, and transmits the data to the CPU.

### [3. Module mounting surface height evaluation method]

Next, an example of a module mounting surface height evaluation method according to the present embodiment will be described. The module mounting surface height evaluation is performed at the time of work for attaching the modules 1M to the mounting base 11 in manufacturing of the photovoltaic apparatus.

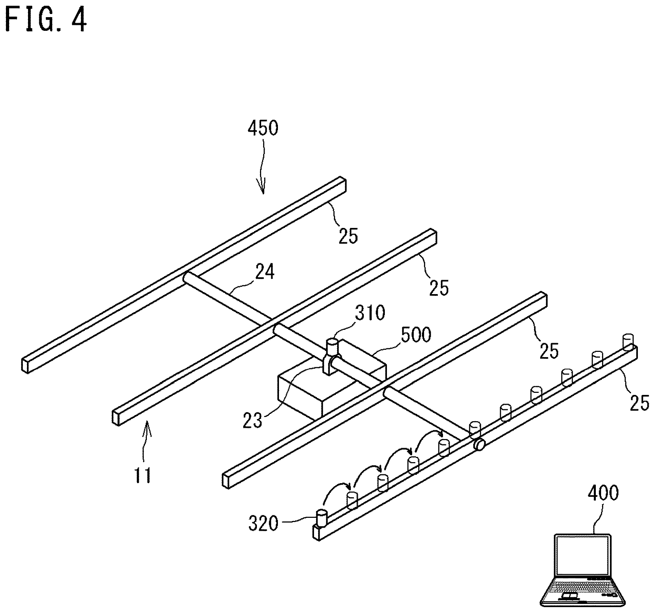

FIG. 4 illustrates work for module mounting surface height evaluation. Before performing work for attaching the modules 1M to the mounting base 11, a part excluding the post 21 and the base 22, of the support device 2, i.e., an assembly 450 composed of the biaxial drive part 23, the horizontal shaft 24, and the mounting base 11 is mounted on a pedestal 500. The pedestal 500 has a precisely horizontal upper surface. The biaxial drive part 23 is mounted on the upper surface of the pedestal 500. The biaxial drive part 23 has a flat part parallel to the horizontal shaft 24 and the support arms 25, and the assembly 450 is mounted such that the flat part is in contact with the upper surface of the pedestal 500. Thus, the horizontal shaft 24 and the support arms 25 are arranged horizontally.

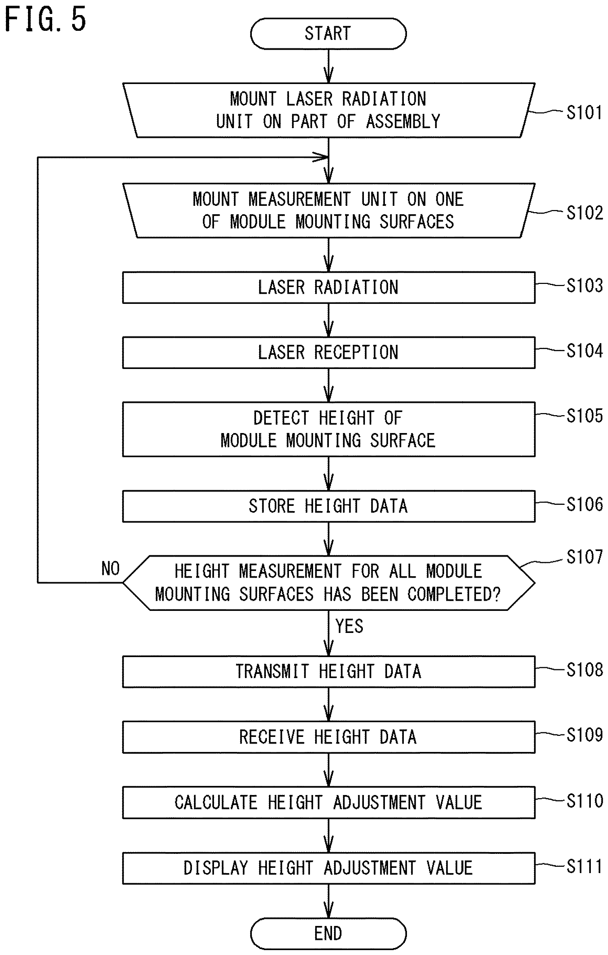

FIG. 5 is a flowchart showing an example of the module mounting surface height evaluation method for the photovoltaic apparatus according to the present embodiment. In FIG. 5, work performed by a person is indicated by an inverted trapezoid frame, and processing executed by a device is indicated by a rectangular frame. First, the worker mounts the laser radiation unit 310 of the height measurement device 300 on a reference surface which is a part of the assembly 450 (step S101). In terms of mounting stability of the laser radiation unit 310, preferably, the reference surface on which the laser radiation unit 310 is mounted is a flat surface. In addition, preferably, the reference surface on which the laser radiation unit 310 is mounted is a part higher than other parts so that a laser beam radiated from the laser radiation unit 310 is not blocked. Specifically, it is favorable that the laser radiation unit 310 is mounted on a flat surface provided to the biaxial drive part 23. However, the flat surface provided to the biaxial drive part 23 is merely an example of the reference surface on which the laser radiation unit 310 is mounted, and the laser radiation unit 310 may be mounted on another part.

Next, the worker mounts the measurement unit 320 on one of the module mounting surfaces 25a of the mounting base 11 (step S 102). In this state, the worker presses a laser radiation switch provided to the laser radiation unit 310, to command the laser radiation unit 310 to radiate a laser beam. Thus, the laser radiation unit 310 radiates a laser beam over a 360° range in the horizontal direction (step S103).

The measurement unit 320 receives the laser beam radiated from the laser radiation unit 310 (step S104). The calculation unit 322 of the measurement unit 320 detects the Z-direction position of the measurement unit 320, i.e., the height of the module mounting surface 25a on which the measurement unit 320 is mounted, on the basis of the received laser beam (step S105).

The calculation unit 322 stores height data indicating the height of the module mounting surface 25a which is a measurement result, into the storage unit 323 (step S106). At this time, the height data is stored together with a number (index) indicating the order of measurement. That is, the number for the module mounting surface 25a of which the height is first measured is " 1", and the number for the module mounting surface 25a of which the height is second measured is "2". The number is an example of identification information for identifying the module mounting surface 25a. As described above, the height data is stored in association with the identification information, whereby the module mounting surface 25a to which the height data corresponds can be easily specified.

If there is any module mounting surface 25a of which the height has not been measured yet (NO in step S107), the process returns to step S102, so that the worker mounts the measurement unit 320 on another module mounting surface 25a of which the height has not been measured yet (step S102). Thereafter, the subsequent processing from step S103 is executed.

Here, the module mounting surfaces 25a will be described. FIG. 6 illustrates the module mounting surfaces 25a on which the adjacent units 1U are to be mounted. FIG. 6 shows an enlarged view of parts of the support arms 25. The units 1U adjacent to each other in the Y direction are close to each other to such an extent as to be approximately in contact with each other. Therefore, in each support arm 25, the attachment holes 25b to which the units 1U adjacent to each other in the Y direction are attached are provided to be close to each other. Therefore, the heights of surfaces around the two attachment holes 25b provided to be close to each other as described above are substantially the same. Accordingly, the surfaces around the two attachment holes 25b can be treated as one module mounting surface 25a. Thus, the number of the module mounting surfaces 25a for which the heights are to be measured can be decreased, whereby workability is improved.

FIG. 5 is referred to again. If the module mounting surface 25a on which the measurement unit 320 is mounted is the last one, i.e., if height measurement has been performed for all the module mounting surfaces 25a (YES in step S107), the measurement unit 320 wirelessly transmits all the height data stored in the storage unit 323 (step S108). The data processing device 400 receives the height data wirelessly transmitted from the measurement unit 320 (step S109).

The CPU of the data processing device 400 calculates a height adjustment value based on a difference of the height of the module mounting surface 25a from a reference height (step S110). For example, the CPU sets the greatest value of the received heights of the module mounting surfaces 25a, as the reference height. The setting of the reference height is merely an example, and another value may be set as the reference height. The CPU calculates the difference between each of the heights of the module mounting surfaces 25a and the reference height. In order to equalize the attachment heights of the modules 1M, it is necessary to mount shims on each module mounting surface 25a to the same height as the highest position of the module mounting surfaces 25a. That is, adjustment of the heights using shims is made so as to be equal to the highest position of the module mounting surfaces 25a. From the calculated difference, the CPU can calculate the type and the number of shims that need to be provided, as the adjustment value. This adjustment value is merely an example, and may be information other than the type and the number of shims needed. For example, a value obtained by performing rounding processing such as rounding-off on the difference between the height of the module mounting surface 25a and the reference height may be used as the adjustment value, or the difference itself may be used as the adjustment value.

The CPU of the data processing device 400 causes the display unit 402 to display the calculated adjustment value together with the number (step S111). Thus, the module mounting surface height evaluation for the photovoltaic apparatus is finished.

The worker confirms the adjustment value displayed on the display unit 402, provides shims on each module mounting surface 25a, and attaches the unit 1U. Thus, the attachment heights of the modules 1M can be equalized.

With the module mounting surface height evaluation system 200 for the photovoltaic apparatus and the module mounting surface height evaluation method for the photovoltaic apparatus as described above, the heights of the module mounting surfaces 25a can be measured by the height measurement device 300, and thus workability in height evaluation for the module mounting surfaces is improved.

Since the height measurement device 300 includes the storage unit 323, the height of each module mounting surface 25a stored in the storage unit 323 can be easily inputted to the data processing device 400, whereby workability is further improved. In addition, since the measured height data is wirelessly transmitted from the height measurement device 300 to the data processing device 400, workability is further improved.

Since the laser-type height measurement device 300 is used, the height of the module mounting surface can be easily and accurately measured by a laser beam.

### [4-1. First modification - an example useful for understanding the invention]

The height measurement device 300 is not limited to the configuration including the laser radiation unit 310 and the measurement unit 320. For example, a reflection-type laser height measurement device may be used. In the reflection-type laser height measurement device, the configuration of the measurement unit 320 is provided to the laser radiation unit 310. In the present modification, the worker mounts a reflection plate on each module mounting surface 25a in order, instead of the measurement unit 320. When the reflection plate is mounted on the module mounting surface 25a, the laser radiation unit 310 radiates a laser beam and the reflection plate reflects the laser beam. The reflected laser beam is received by the laser receiving unit 321 provided to the laser radiation unit 310. The calculation unit 322 provided to the laser radiation unit 310 calculates the reception height of the laser beam on the basis of an output signal from the laser receiving unit 321, and stores the reception height of the laser beam into the storage unit 323. In addition, the wireless communication unit 324 wirelessly transmits the height data stored in the storage unit 323.

A plurality of reflection parts may be mounted on a plurality of module mounting surfaces 25a. Thus, it is possible to measure the heights of the plurality of module mounting surfaces 25a by one laser radiation. Further, for example, a reflection unit formed by attaching a plurality of reflection parts to a band-shaped flexible member may be used. The reflection unit is mounted on the mounting base 11 such that the reflection parts of the reflection unit are respectively located at the plurality of module mounting surfaces 25a. Thus, the plurality of reflection parts can be easily mounted on the plurality of module mounting surfaces 25a.

The communication configuration is not limited to a configuration in which the height measurement device 300 and the data processing device 400 perform transmission/reception of height data via wireless communication. For example, a configuration in which the height measurement device 300 and the data processing device 400 are allowed to be connected by a universal serial bus (USB) or the like and the height data is transmitted via a cable, may be employed.

### [4-2. Second modification]

The timing of laser radiation by the laser radiation unit 310 is not limited to when the laser radiation switch provided to the laser radiation unit 310 is pressed. In the present modification, the measurement unit 320 commands the laser radiation unit 310 to radiate a laser beam through communication, and the laser radiation unit 310 radiates a laser beam at a timing when the command is received. Hereinafter, the configuration of the evaluation system according to the present modification will be specifically described.

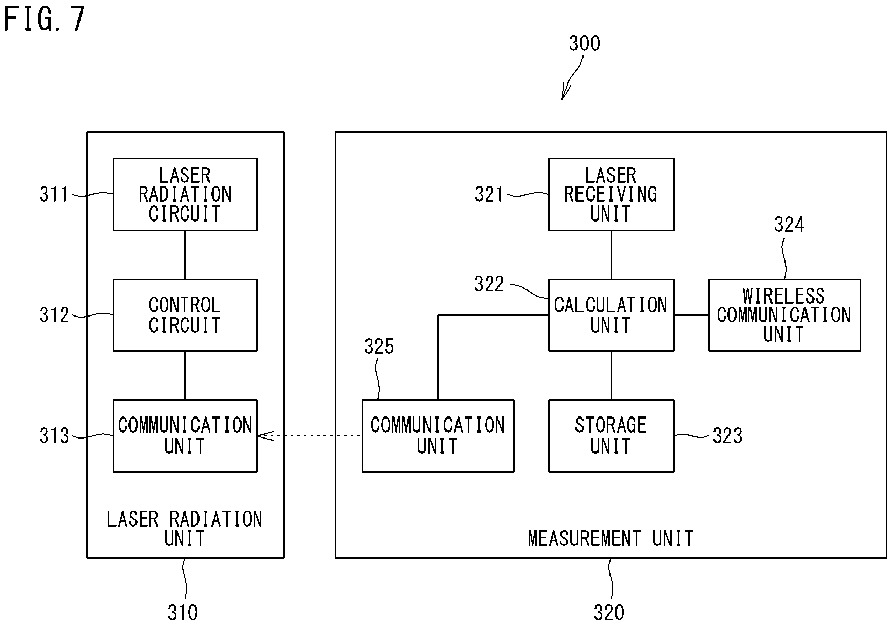

FIG. 7 is a block diagram showing an example of the configuration of a height measurement device according to the second modification. The measurement unit includes a communication unit (command transmission unit) 325, in addition to the laser receiving unit 321, the calculation unit 322, the storage unit 323, and the wireless communication unit 324. The laser radiation unit 310 includes a laser radiation circuit 311, a control circuit 312, and a communication unit (command reception unit) 313. The communication unit 325 and the communication unit 313 can communicate with each other. The communication unit 325 and the communication unit 313 may be wireless communication units or may be infrared communication units, for example. The laser radiation circuit 311 includes a laser element (not shown) and can radiate a laser beam from the laser element. The control circuit 312 can control the laser radiation circuit 311. The control circuit 312 can control the communication unit 313. The communication unit 313 transmits transmission data sent from the control circuit 312, and outputs received data to the control circuit 312.

For example, a laser radiation switch is provided to the measurement unit 320, and when the worker operates the laser radiation switch, a laser radiation command is transmitted from the communication unit 325. When the communication unit 313 has received the laser radiation command, the laser radiation command is sent to the control circuit 312, and the control circuit 312 controls the laser radiation circuit 311 in accordance with the laser radiation command, so that the laser radiation circuit 311 radiates a laser beam. Therefore, for pressing the laser radiation switch, the worker need not move to the laser radiation unit 310, and thus workability is further improved.

For example, a sensor such as a contact sensor may be provided to the measurement unit 320, and the communication unit 325 may transmit a laser radiation command at a timing when the sensor detects that the measurement unit 320 is mounted on the module mounting surface 25a. Thus, height measurement for the module mounting surface 25a is performed merely by the worker mounting the measurement unit 320 on the module mounting surface 25a, whereby workability is further improved.

### [4-3. Third modification - an example useful for understanding the invention]

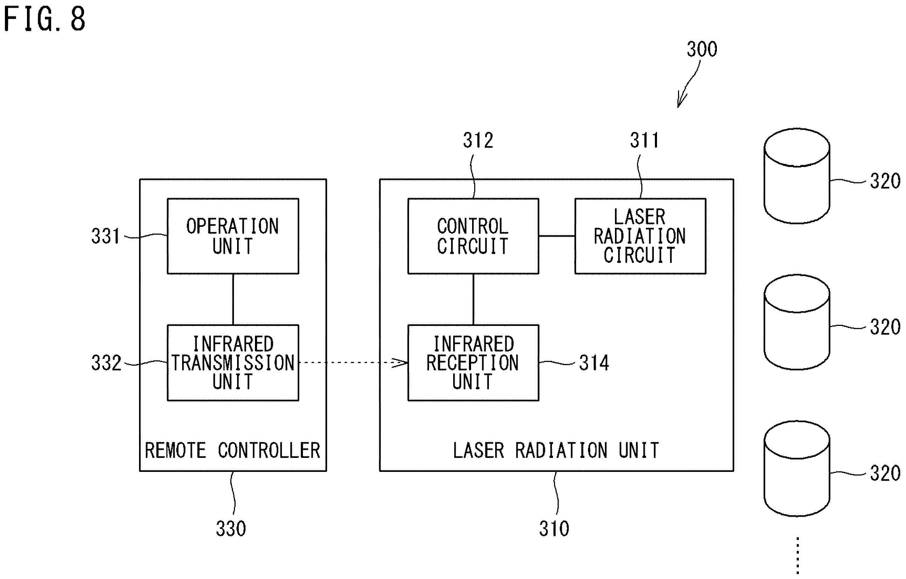

FIG. 8 is a block diagram showing an example of the configuration of a height measurement device according to a third modification. The height measurement device 300 according to the present modification includes one laser radiation unit 310, a plurality of measurement units 320, and a remote controller 330. The configuration of each measurement unit 320 is the same as that of the measurement unit 320 according to the above embodiment, and therefore the description thereof is omitted.

The remote controller 330 includes an operation unit 331 and an infrared transmission unit (command transmission unit) 332. The laser radiation unit 310 includes the laser radiation circuit 311, the control circuit 312, and an infrared reception unit (command reception unit) 314. In the remote controller 330, the infrared transmission unit 332 transmits an infrared signal in accordance with an operation given to the operation unit 331. When the infrared reception unit 314 has received the infrared signal, the infrared reception unit 314 converts the received infrared signal to an electric signal, and outputs the electric signal to the control circuit 312.

For example, the worker mounts the plurality of measurement units 320 on the plurality of module mounting surfaces 25a, respectively. The worker moves to such a position as not to prevent the measurement units 320 from receiving a laser beam, and then operates the operation unit 331 of the remote controller 330 to give a command to start measurement for the heights of the module mounting surfaces 25a. In accordance with the operation on the operation unit 331, an infrared signal for commanding to radiate a laser beam is transmitted from the remote controller 330. When the infrared reception unit 314 of the laser radiation unit 310 has received the infrared signal, an electric signal for commanding to radiate a laser beam is sent to the control circuit 312, and the control circuit 312 controls the laser radiation circuit 311, so that the laser radiation circuit 311 radiates a laser beam over a 360° range in the horizontal direction.

The plurality of measurement units 320 mounted on the plurality of module mounting surfaces 25a receive the laser beam, and each detect the height of the module mounting surface 25a on which the measurement unit 320 is mounted. Thus, it is possible to measure the heights of the plurality of module mounting surfaces 25a by one laser radiation. The calculation unit 322 of each measurement unit 320 stores the height data of the module mounting surface 25a detected by itself into the storage unit 323, and the stored height data of the module mounting surface 25a is transmitted by the wireless communication unit 324. The wireless communication unit 411 of the data processing device 400 receives the height data of the plurality of module mounting surfaces 25a transmitted from the measurement unit 320, and the data processing unit 401 calculates respective height adjustment values for the plurality of module mounting surfaces 25a.

For example, the measurement units 320 are allocated with numbers and the numbers are stored in the storage unit 323 in advance. The calculation unit 322 of the measurement unit 320 can transmit height data together with the own number. The number of the measurement unit 320 is an example of identification information of the module mounting surface 25a. The CPU of the data processing device 400 causes the display unit 402 to display the calculated adjustment value together with the number. Thus, the height adjustment values are outputted in association with identification information, whereby the module mounting surface 25a to which the height adjustment value corresponds can be easily specified.

### [8. Supplementary note]

It should be noted that the embodiment disclosed herein is merely illustrative and not restrictive in all aspects. The scope of the present invention is defined by the scope of the claims, and is intended to include the scope of the claims and all modifications within the scope.

### REFERENCE SIGNS LIST

- 1: array
- 11: mounting base
- 1M: concentrator solar cell module
- 1U: unit
- 2: support device
- 21: post
- 22: base
- 23: biaxial drive part
- 24: horizontal shaft
- 25: support arm
- 25a: module mounting surface
- 25b: attachment hole
- 26: rail
- 100: photovoltaic apparatus
- 200: module mounting surface height evaluation system
- 300: height measurement device
- 310: laser radiation unit
- 311: laser radiation circuit
- 312: control circuit
- 313: communication unit (command reception unit)
- 314: infrared reception unit (command reception unit)
- 320: measurement unit
- 321: laser receiving unit
- 322: calculation unit
- 323: storage unit
- 324: wireless communication unit (first wireless communication unit)
- 325: communication unit (command transmission unit)
- 330: remote controller
- 331: operation unit
- 332: infrared transmission unit (command transmission unit)
- 400: data processing device
- 401: data processing unit
- 402: display unit
- 403: input unit
- 411: wireless communication unit (second wireless communication unit)
- 450: assembly
- 500: pedestal

## Claims

1. An evaluation method for evaluating a vertical-direction height of each of a plurality of module mounting surfaces (25a) of a plurality of support arms (25) of a mounting base (11), the plurality of support arms (25) being parallel to each other, the plurality of module mounting surfaces (25a) allowing a plurality of solar cell modules (1M) to be attached thereto, the evaluation method comprising the steps of:
radiating a laser beam from a laser radiation unit (310) mounted on a reference surface of a biaxial drive part (23) of an assembly (450) including a horizontal shaft (24) and the mounting base (11), the assembly (450) being mounted on a pedestal (500) by mounting the biaxial drive part (23) on an upper surface of the pedestal (500);
on each of the plurality of module mounting surfaces (25a) arranged in a longitudinal direction of the support arms (25), mounting a measurement unit (320) in order, and by the measurement unit (320), receiving the laser beam radiated by the laser radiation unit (310), on each of the plurality of module mounting surfaces, every time the measurement unit (320) is mounted on each of the plurality of module mounting surfaces (25a);
by the measurement unit (320), detecting a vertical-direction height of each of the plurality of module mounting surfaces (25a) on the basis of a reception position of the laser beam in the measurement unit (320), every time the measurement unit (320) is sequentially mounted on each of the plurality of module mounting surfaces (25a); and
by a data processing device (400), outputting, for each of the plurality of module mounting surfaces (25a), a height adjustment value so as to allow light receiving surfaces of the plurality of solar cell modules (1M) to form one flat surface, on the basis of respective differences between the vertical-direction heights of the plurality of module mounting surfaces (25a) detected by the measurement unit (320) and a predetermined reference height in a vertical direction.

2. The evaluation method according to claim 1, wherein
the reference height is one vertical-direction height of the module mounting surface (25a) selected from the vertical-direction heights of the plurality of module mounting surfaces (25a) detected by the measurement unit (320).

3. The evaluation method according to claim 1 or claim 2, further comprising the step of storing the detected vertical-direction height of each of the plurality of module mounting surfaces (25a) into a storage unit (323) provided to the measurement unit (320), every time the measurement unit (320) is sequentially mounted on each of the plurality of module mounting surfaces (25a), wherein
in the outputting step, the height adjustment value is outputted for each of the plurality of module mounting surfaces (25a) on the basis of the respective vertical-direction heights of the plurality of module mounting surfaces (25a) stored in the storage unit (323).

4. The evaluation method according to claim 3, wherein
in the storing step, every time the measurement unit (320) is sequentially mounted on each of the plurality of module mounting surfaces (25a), the vertical-direction heights of the plurality of module mounting surfaces (25a) are stored respectively in association with a plurality of pieces of identification information for identifying the plurality of module mounting surfaces (25a), and
in the outputting step, the data processing device (400) outputs the height adjustment value for each piece of the identification information.

5. The evaluation method according to claim 1 or 2, further comprising the steps of:
wirelessly transmitting, from the measurement unit (320), vertical-direction height information of each of the plurality of module mounting surfaces (25a) detected by the measurement unit (320), and
in the data processing device (400), receiving the vertical-direction height information of each of the plurality of module mounting surfaces (25a) wirelessly transmitted from the measurement unit (320), wherein
in the outputting step, the height adjustment value is outputted for each of the plurality of module mounting surfaces (25a) on the basis of the received vertical-direction height information of each of the plurality of module mounting surfaces (25a).

6. The evaluation method according to claim 5, wherein
in the wirelessly transmitting step, the vertical-direction height information of each of the plurality of module mounting surfaces (25a) is wirelessly transmitted respectively in association with a plurality of pieces of identification information for identifying the plurality of module mounting surfaces (25a), and
in the outputting step, the data processing device (400) outputs the height adjustment value for each piece of the identification information.

7. The evaluation method according to any one of claims 1 to 6, further comprising the steps of:
transmitting, from the measurement unit (320) to the laser radiation unit, a laser radiation command every time the measurement unit is sequentially mounted on each of the plurality of module mounting surfaces (25a); and
receiving, by the laser radiation unit, the laser radiation command transmitted from the measurement unit (320), wherein
in the laser radiating step, the laser beam is radiated by the laser radiation unit in accordance with the received laser radiation command.

## Patentansprüche

1. Bewertungsverfahren zum Bewerten einer Höhe in vertikaler Richtung von jeder einer Vielzahl von Modulanbringungsflächen (25a) zahlreicher Tragarme (25) einer Anbringungsbasis (11), wobei die zahlreichen Tragarme (25) parallel zueinander sind und die Vielzahl von Modulanbringungsflächen (25a) es ermöglicht, eine Vielzahl von Solarzellenmodulen (IM) daran zu befestigen, wobei das Bewertungsverfahren die folgenden Schritte umfasst:
Abstrahlen eines Laserstrahls von einer Laserabstrahleinheit (310), die auf einer Bezugsfläche eines zweiachsigen Antriebsteils (23) einer Baugruppe (450) angebracht ist, die eine horizontale Welle (24) und die Anbringungsbasis (11) umfasst, wobei die Baugruppe (450) auf einem Sockel (500) angebracht ist, indem das zweiachsige Antriebsteil (23) auf einer Oberseite des Sockels (500) angebracht ist;
Anbringen, auf jeder der Vielzahl von Modulanbringungsflächen (25a), die in einer Längsrichtung der Tragarme (25) angeordnet sind, einer Messeinheit (320) in Reihenfolge und durch die Messeinheit (320) Empfangen des von der Laserabstrahleinheit (310) abgestrahlten Laserstrahls auf jeder der Vielzahl von Modulanbringungsflächen, jedes Mal, wenn die Messeinheit (320) auf jeder der Vielzahl von Modulanbringungsflächen (25a) angebracht wird;
Erfassen, durch die Messeinheit (320), einer Höhe in vertikaler Richtung jeder der Vielzahl von Modulanbringungsflächen (25a) auf der Grundlage einer Empfangsposition des Laserstrahls in der Messeinheit (320), jedes Mal, wenn die Messeinheit (320) nacheinander auf jeder der Vielzahl von Modulanbringungsflächen (25a) angebracht wird; und
Ausgeben, durch eine Datenverarbeitungsvorrichtung (400), eines Höheneinstellwertes für jede der Vielzahl von Modulanbringungsflächen (25a) um zu ermöglichen, dass Lichtempfangsoberflächen der Vielzahl von Solarzellenmodulen (IM) eine flache Oberfläche bilden, auf der Grundlage der jeweiligen Unterschiede zwischen den Höhen in vertikaler Richtung der Vielzahl von Modulanbringungsflächen (25a), die durch die Messeinheit (320) erfasst werden, und einer vorbestimmten Bezugshöhe in einer vertikalen Richtung.

2. Bewertungsverfahren nach Anspruch 1, bei dem
die Bezugshöhe eine Höhe in vertikaler Richtung der Modulanbringungsfläche (25a) ist, die aus den von der Messeinheit (320) erfassten Höhen in vertikaler Richtung der Vielzahl von Modulanbringungsflächen (25a) ausgewählt wird.

3. Bewertungsverfahren nach Anspruch 1 oder Anspruch 2, weiterhin umfassend den Schritt des Speicherns der erfassten Höhe in vertikaler Richtung jeder der Vielzahl von Modulanbringungsflächen (25a) in einer Speichereinheit (323), die der Messeinheit (320) jedes Mal zur Verfügung gestellt wird, wenn die Messeinheit (320) nacheinander an jeder der Vielzahl von Modulanbringungsflächen (25a) angebracht wird, wobei
in dem Ausgabeschritt der Höheneinstellwert für jede der Vielzahl von Modulanbringungsflächen (25a) auf der Grundlage der jeweiligen Höhen in vertikaler Richtung der Vielzahl von Modulanbringungsflächen (25a), die in der Speichereinheit (323) gespeichert sind, ausgegeben wird.

4. Bewertungsverfahren nach Anspruch 3, bei dem
in dem Speicherschritt jedes Mal, wenn die Messeinheit (320) nacheinander auf jeder der Vielzahl von Modulanbringungsflächen (25a) angebracht wird, die Höhen in vertikaler Richtung der Vielzahl von Modulanbringungsflächen (25a) jeweils in Zuordnung mit einer Vielzahl von Stücken von Identifikationsinformationen zum Identifizieren der Vielzahl von Modulanbringungsflächen (25a) gespeichert werden, und
in dem Ausgabeschritt die Datenverarbeitungsvorrichtung (400) den Höheneinstellwert für jedes Stück der Identifikationsinformationen ausgibt.

5. Bewertungsverfahren nach Anspruch 1 oder 2, weiterhin umfassend die folgenden Schritte:
drahtloses Senden, von der Messeinheit (320), von Vertikalrichtungs-Höheninformationen jeder der Vielzahl von Modulanbringungsflächen (25a), die von der Messeinheit (320) erfasst werden, und
Empfangen, in der Datenverarbeitungsvorrichtung (400), der von der Messeinheit (320) drahtlos gesendeten Vertikalrichtungs-Höheninformationen jeder der Vielzahl von Modulanbringungsflächen (25a), wobei
in dem Ausgabeschritt der Höheneinstellwert für jede der Vielzahl von Modulanbringungsflächen (25a) auf der Grundlage der empfangenen Vertikalrichtungs-Höheninformationen jeder der Vielzahl von Modulanbringungsflächen (25a) ausgegeben wird.

6. Bewertungsverfahren nach Anspruch 5, bei dem
in dem Schritt des drahtlosen Sendens die Vertikalrichtungs-Höheninformationen von jeder der Vielzahl von Modulanbringungsflächen (25a) jeweils in Zuordnung mit einer Vielzahl von Stücken von Identifikationsinformationen zum Identifizieren der Vielzahl von Modulanbringungsflächen (25a) drahtlos gesendet werden und
in dem Ausgabeschritt die Datenverarbeitungseinrichtung (400) den Höheneinstellwert für jedes Stück der Identifikationsinformationen ausgibt.

7. Bewertungsverfahren nach einem der Ansprüche 1 bis 6, weiterhin umfassend folgende Schritte:
Senden eines Laserabstrahlbefehls von der Messeinheit (320) an die Laserabstrahleinheit jedes Mal, wenn die Messeinheit nacheinander auf jeder der Vielzahl von Modulanbringungsflächen (25a) angebracht wird; und
Empfangen des von der Messeinheit (320) gesendeten Laserabstrahlbefehls durch die Laserabstrahleinheit, wobei
in dem Laserabstrahlschritt der Laserstrahl von der Laserabstrahleinheit entsprechend dem empfangenen Laserabstrahlbefehl abgestrahlt wird.

## Revendications

1. Procédé d'évaluation destiné à évaluer une hauteur dans la direction verticale de chacune parmi une pluralité de surfaces de montage de module (25a) d'une pluralité de bras de support (25) d'une base de montage (11), la pluralité de bras de support (25) étant parallèles les uns aux autres, la pluralité de surfaces de montage de module (25a) permettant à une pluralité de modules de photopile (1M) d'être fixées contre celles-ci, le procédé d'évaluation comprenant les étapes de :
rayonnement d'un faisceau laser depuis une unité de rayonnement laser (310) montée sur une surface de référence d'une pièce d'entraînement biaxiale (23) d'un assemblage (450) incluant un arbre horizontal (24) et la base de montage (11), l'assemblage (450) étant monté sur un socle (500) en montant la pièce d'entraînement biaxiale (23) sur une surface supérieure du socle (500) ;
sur chacune parmi la pluralité de surfaces de montage de module (25a) agencées dans une direction longitudinale des bras de support (25), montage d'une unité de mesure (320) dans l'ordre, et par l'unité de mesure (320), réception du faisceau laser irradié par l'unité de rayonnement laser (310), sur chacune parmi la pluralité de surfaces de montage de module, à chaque fois que l'unité de mesure (320) est montée sur chacune parmi la pluralité de surfaces de montage de module (25a) ;
par l'unité de mesure (320), détection d'une hauteur dans la direction verticale de chacune parmi la pluralité de surfaces de montage de module (25a) sur la base d'une position de réception du faisceau laser dans l'unité de mesure (320), à chaque fois que l'unité de mesure (320) est montée séquentiellement sur chacune parmi la pluralité de surfaces de montage de module (25a) ; et
par un dispositif de traitement de données (400), émission, pour chacune parmi la pluralité de surfaces de montage de module (25a), d'une valeur d'ajustement de hauteur de manière à permettre à des surfaces de réception de lumière de la pluralité de modules de photopile (1M) de former une surface plane, sur la base de différences respectives entre les hauteurs dans la direction verticale de la pluralité de surfaces de montage de module (25a) détectées par l'unité de mesure (320) et une hauteur de référence prédéterminée dans une direction verticale.

2. Procédé d'évaluation selon la revendication 1, dans lequel
la hauteur de référence est une hauteur dans la direction verticale de la surface de montage de module (25a) sélectionnée parmi les hauteurs dans la direction verticale de la pluralité de surfaces de montage de module (25a) détectées par l'unité de mesure (320).

3. Procédé d'évaluation selon la revendication 1 ou la revendication 2, comprenant en outre l'étape de stockage de la hauteur dans la direction verticale de chacune parmi la pluralité de surfaces de montage de module (25a) jusque dans une unité de stockage (323) prévue contre l'unité de mesure (320), à chaque fois que l'unité de mesure (320) est montée séquentiellement sur chacune parmi la pluralité de surfaces de montage de module (25a), dans lequel
dans l'étape d'émission, la valeur d'ajustement de hauteur est émise pour chacune parmi la pluralité de surfaces de montage de module (25a) sur la base des hauteurs dans la direction verticale respectives de la pluralité de surfaces de montage de module (25a) stockées dans l'unité de stockage (323).

4. Procédé d'évaluation selon la revendication 3, dans lequel dans l'étape de stockage, à chaque fois que l'unité de mesure (320) est montée séquentiellement sur chacune parmi la pluralité de surfaces de montage de module (25a), les hauteurs dans la direction verticale de la pluralité de surfaces de montage de module (25a) sont respectivement stockées en association avec une pluralité de pièces d'information d'identification pour identifier la pluralité de surfaces de montage de module (25a), et
dans l'étape d'émission, le dispositif de traitement de données (400) émet la valeur d'ajustement de hauteur pour chaque pièce de l'information d'identification.

5. Procédé d'évaluation selon la revendication 1 ou 2, comprenant en outre les étapes de :
transmission sans fil, depuis l'unité de mesure (320), d'une information de hauteur dans la direction verticale de chacune parmi la pluralité de surfaces de montage de module (25a) détectée par l'unité de mesure (320), et
dans le dispositif de traitement de données (400), réception de l'information de hauteur dans la direction verticale de chacune parmi la pluralité de surfaces de montage de module (25a) transmise sans fil depuis l'unité de mesure (320), dans lequel
dans l'étape d'émission, la valeur d'ajustement de hauteur est émise pour chacune parmi la pluralité de surfaces de montage de module (25a) sur la base de l'information de hauteur dans la direction verticale reçue de chacune parmi la pluralité de surfaces de montage de module (25a).

6. Procédé d'évaluation selon la revendication 5, dans lequel
dans l'étape de transmission sans fil, l'information de hauteur dans la direction verticale de chacune parmi la pluralité de surfaces de montage de module (25a) est transmise sans fil respectivement en association avec une pluralité de pièces d'information d'identification pour identifier la pluralité de surfaces de montage de module (25a), et
dans l'étape d'émission, le dispositif de traitement de données (400) émet la valeur d'ajustement de hauteur pour chaque pièce de l'information d'identification.

7. Procédé d'évaluation selon l'une quelconque des revendications 1 à 6, comprenant en outre les étapes de :
transmission, depuis l'unité de mesure (320) vers l'unité de rayonnement laser, d'une instruction de rayonnement laser à chaque fois que l'unité de mesure est montée séquentiellement sur chacune parmi la pluralité de surfaces de montage de module (25a) ; et
réception, par l'unité de rayonnement laser, de l'instruction de rayonnement laser transmise depuis l'unité de mesure (320), dans lequel
dans l'étape de rayonnement laser, le faisceau laser est irradié par l'unité de rayonnement laser en fonction de l'instruction de rayonnement laser reçue.
